# EUROPÄISCHE PATENTANMELDUNG

(11) **EP 4 378 716 A1**
(43) Veröffentlichungstag der Anmeldung: **05.06.2024**
(21) Anmeldenummer: 23213571.5
(22) Anmeldetag: 01.12.2023
(51) Int. Cl.: B60C 23/00, B60C 23/04, B60C 23/06

(54) **SYSTEM UND VERFAHREN ZUR BESTIMMUNG DER POSITIONSVERTEILUNG VON SENDERN UND SENSOREN IN FAHRZEUGREIFEN AM FAHRZEUG**

(30) Priorität: 02.12.2022 DE 102022213047
(71) Anmelder: Continental Reifen Deutschland GmbH, 30175 Hannover (DE)
(72) Erfinder: Sahlmüller, Baldo, 30175 Hannover (DE); James, Akhil, 30175 Hannover (DE); Lehmann, Jörg, 30175 Hannover (DE); Nettelmann, Marc, 30175 Hannover (DE); Jaedicke, Jessica, 30175 Hannover (DE)
(74) Vertreter: Continental Corporation

(57) **Zusammenfassung**

Die Erfindung betrifft ein Fahrzeugsystem (10), umfassend: a) ein Fahrzeug, und b) ein System zur Bestimmung der Positionsverteilung von elektronischen Sendeeinheiten (12a-f) in Fahrzeugreifen am Fahrzeug, umfassend: Systemfahrzeugreifen (14a-f) mit einer Sendeeinheit (12a-f), eine Empfangseinheit (16) und eine Auswerteeinheit (18), wobei die Empfangseinheit (16) dazu eingerichtet ist, die von den Sendeeinheiten (12a-f) gesendeten Signale zu empfangen und deren Signalstärke zu ermitteln, wobei jeder Systemfahrzeugreifen (14a-f) eine elektronische Sensoreinheit (20a-f) zur Bestimmung einer oder mehrerer zeitabhängigen Reifeninformationen umfasst, wobei die zeitabhängigen Reifeninformationen ausgewählt sind aus der Gruppe bestehend aus Radlast, Radialbeschleunigung und Laufleistung, wobei die elektronische Auswerteeinheit (18) dazu eingerichtet ist, die Positionsverteilung der elektronischen Sendeeinheiten (12a-f) auf die Systemfahrzeugreifen (14a-f) unter Berücksichtigung von vorgegebenen Reifenplätzen in einem Reifenplan des Fahrzeugs zu bestimmen, und die elektronischen Sendeeinheiten (12a-f) den vorgegebenen Reifenplätzen zuzuordnen, wobei zumindest einem Teil der vorgegebenen Reifenplätze bezüglich der zeitabhängigen Reifeninformationen Zuordnungskriterien zugewiesen sind, die erfüllt sein müssen, damit die elektronische Auswerteeinheit (18) den Systemfahrzeugreifen (14a-f) dem Reifenplatz zuweisen kann.

## Beschreibung

Die Erfindung betrifft ein Fahrzeugsystem mit einem System zur Bestimmung der Positionsverteilung von elektronischen Sendeeinheiten in Fahrzeugreifen an einem Fahrzeug und ein zugehöriges Verfahren zur Bestimmung der Positionsverteilung von elektronischen Sendeeinheiten in den Fahrzeugreifen des Fahrzeugsystems.

Die fortschreitende technische Entwicklung und die zunehmende Digitalisierung betreffen insbesondere auch den Bereich der Fahrzeugtechnik und der Fahrzeugreifen. Es besteht ein fortgesetztes Interesse daran, bei den in Fahrzeugen eingesetzten Komponenten fortlaufend Leistungsdaten zu erfassen, um beispielsweise die Leistungsfähigkeit und Betriebssicherheit kontinuierlich zu überwachen. Zu den Informationen, die bei Fahrzeugreifen überwacht werden können, gehören beispielsweise der Reifendruck, die Reifentemperatur oder die vom Fahrzeugreifen im Betrieb erfahrene Beschleunigung.

In der Praxis müssen die von in Fahrzeugreifen angeordneten Sensoren gesammelten Informationen jedoch nicht nur erfasst und ausgewertet werden, sondern diese Informationen müssen zudem den jeweiligen Fahrzeugreifen in der Reifenanordnung des Fahrzeuges zugeordnet werden, damit beispielsweise identifiziert werden kann, welcher Fahrzeugreifen einer Reifenanordnung einen Druckabfall zeigt, ohne den Fahrzeugführer zu zwingen, zur Identifikation des schadhaften Fahrzeugreifens alle Fahrzeugreifen manuell zu überprüfen.

Die automatische Zuordnung von Reifensensoren zu den Reifenpositionen am Fahrzeug ist insbesondere bei Nutzfahrzeugen mit mehr als vier Reifen eine sehr komplexe Aufgabe, die noch nicht abschließend zur vollständigen Zufriedenheit gelöst ist.

Informationen zum technologischen Hintergrund sind beispielsweise in der WO 2011 /162962 A1, der DE 10250942 A1, der US 7467034 B2, der US 6259361 B1 oder der US 9259979 B2 offenbart.

Im Stand der Technik gibt es insbesondere Ansätze, die Signalstärke der Sendeeinheiten der Sensoren in Bezug auf einen oder mehrere stationäre Empfänger, die beispielsweise am Fahrzeug oder außerhalb des Fahrzeuges angeordnet sein können, zu nutzen. In einem solchen auf einer Signalstärke-Abstandskorrelation basierenden Verfahren wird ausgenutzt, dass die jeweils bestimmte Signalstärke neben der Stärke des Ausgangssignals, die in der Regel sehr stabil ist, insbesondere vom Abstand des Senders und Empfängers abhängt.

Allerdings erfordern die aus dem Stand der Technik bekannten Ansätze zumeist die Installation von weiteren Komponenten, beispielsweise einer erhöhten Zahl an Empfängern, was unter kostentechnischen Gesichtspunkten als nachteilig angesehen wird. Zudem werden die aus dem Stand der Technik bekannten Ansätze in vielen Fällen nicht als zuverlässig genug empfunden, gerade bei Fahrzeugen mit mehr als vier Fahrzeugreifen und/oder Zwillingsbereifung und/oder Liftachsen, wie sie insbesondere bei Nutzfahrzeugen auftreten.

Zudem werden viele der aus dem Stand der Technik bekannten Verfahren als unzureichend dafür empfunden, ausgehend von einer einmal identifizierten und/oder vorgegebenen Zuordnung in einem Fahrzeugplan eine Anpassung vorzunehmen, wenn einzelne Fahrzeugreifen ausgetauscht und/oder in ihrer Position verändert werden.

Die primäre Aufgabe der vorliegenden Erfindung war es, die Nachteile des Standes der Technik auszuräumen oder zumindest zu verringern.

Insbesondere war es eine Aufgabe der vorliegenden Erfindung, ein Fahrzeugsystem zur Bestimmung der Positionsverteilung von elektronischen Sendeeinheiten in Fahrzeugreifen am Fahrzeug und ein zugehöriges Verfahren anzugeben, mit denen die Positionsverteilung von elektronischen Sendeeinheiten in Fahrzeugreifen besonders zuverlässig möglich sein sollte, insbesondere auch bei Fahrzeugen mit Zwillingsbereifung und/oder Liftachsen.

Zudem war es eine Aufgabe der vorliegenden Erfindung, dass mit dem anzugebenden Fahrzeugsystem und dem entsprechenden Verfahren vorgegebene Sensorzuordnungen in einem Reifenplan besonders effizient angepasst werden können, wenn einzelne Fahrzeugreifen ausgetauscht und/oder in ihrer Position verändert werden.

Es war eine weitere Aufgabe der vorliegenden Erfindung, dass die Bestimmung der Positionsverteilung von Sende- bzw. Sensoreinheiten einen möglichst niedrigen Bedarf an Rechenkapazität erfordern sollte.

Es war eine ergänzende Aufgabe der vorliegenden Erfindung, dass das anzugebende Fahrzeugsystem leicht auf eine Vielzahl von bestehenden Fahrzeugen adaptierbar sein sollte, wobei es wünschenswert war, dass möglichst weitgehend auf bestehende Fahrzeugkomponenten zurückgegriffen werden können sollte. Es war insoweit eine zusätzliche Aufgabe der vorliegenden Erfindung, dass das anzugebende Fahrzeugsystem für seine Umsetzung einen möglichst geringen Bedarf an zusätzlichen Vorrichtungen aufweisen sollte.

Die Erfinder haben nunmehr gefunden, dass sich die vorstehend beschriebenen Aufgaben lösen lassen, wenn die Bestimmung der Positionsverteilung von elektronischen Sendeeinheiten in Fahrzeugreifen am Fahrzeug mit einem signalstärkebasierten Verfahren erfolgt, wobei jedem entsprechenden Fahrzeugreifen neben der hierfür benötigten Sendeeinheit zusätzlich eine Sensoreinheit zugeordnet wird, die ein oder mehrere zeitabhängige Reifeninformationen detektieren kann, wobei die Positionsverteilung der Sendeeinheiten unter Berücksichtigung von vorgegebenen Reifenplätzen in einem Reifenplan des Fahrzeugs erfolgt, wobei zumindest einem Teil der vorgegebenen Reifenplätze bezüglich der zeitabhängigen Reifeninformationen Zuordnungskriterien zugewiesen sind, die erfüllt sein müssen, damit die Sendeeinheiten dem Reifenplatz zugewiesen werden können, wie es in den Ansprüchen definiert ist.

Durch die Kombination dieser Merkmale wird nach Einschätzung der Erfinder ein vorteilhaftes Fahrzeugsystem zur Bestimmung der Positionsverteilung von elektronischen Sendeeinheiten in Fahrzeugreifen am Fahrzeug und ein zugehöriges Verfahren erhalten, in dem die Zuordnung von elektronischen Sendeeinheiten mit deutlich gesteigerter Präzision erfolgen kann, wobei insbesondere auch eine zuverlässigere Zuordnung von elektronischen Sendeeinheiten in Zwillingspaketen einer Zwillingsbereifung und/oder auf Liftachsen erfolgen kann.

Die vorstehend genannten Aufgaben werden somit durch den Gegenstand der Erfindung gelöst, wie er in den Ansprüchen definiert ist. Bevorzugte erfindungsgemäße Ausgestaltungen ergeben sich aus den Unteransprüchen und den nachfolgenden Ausführungen.

Solche Ausführungsformen, die nachfolgend als bevorzugt bezeichnet sind, werden in besonders bevorzugten Ausführungsformen mit Merkmalen anderer als bevorzugt bezeichneter Ausführungsformen kombiniert. Ganz besonders bevorzugt sind somit Kombinationen von zwei oder mehr der nachfolgend als besonders bevorzugt bezeichneten Ausführungsformen. Ebenfalls bevorzugt sind Ausführungsformen, in denen ein in irgendeinem Ausmaß als bevorzugt bezeichnetes Merkmal einer Ausführungsform mit einem oder mehreren weiteren Merkmalen anderer Ausführungsformen kombiniert wird, die in irgendeinem Ausmaß als bevorzugt bezeichnet werden. Merkmale bevorzugter Verfahren ergeben sich aus den Merkmalen bevorzugter Fahrzeugsysteme.

Die Erfindung betrifft insbesondere ein Fahrzeugsystem, umfassend:
a) ein Fahrzeug, und
b) ein System zur Bestimmung der Positionsverteilung von elektronischen Sendeeinheiten in Fahrzeugreifen am Fahrzeug, umfassend:
   i) sechs oder mehr am Fahrzeug angeordnete Systemfahrzeugreifen, wobei jeder Systemfahrzeugreifen eine elektronische Sendeeinheit zum Senden von Signalen in einem drahtlosen Übertragungsverfahren umfasst,
   ii) eine zentrale elektronische Empfangseinheit zum Empfangen von Signalen der elektronischen Sendeeinheiten, und
   iii) eine elektronische Auswerteeinheit mit einer Speichereinheit,

wobei die Empfangseinheit dazu eingerichtet ist, die von den elektronischen Sendeeinheiten der Systemfahrzeugreifen gesendeten Signale zu empfangen und deren Signalstärke zu ermitteln, um eine dem jeweiligen Systemfahrzeugreifen zugeordnete Signalinformation zu erhalten,
wobei jedem Systemfahrzeugreifen eine elektronische Sensoreinheit zur Bestimmung einer oder mehrerer dem jeweiligen Systemfahrzeugreifen zugeordneter zeitabhängigen Reifeninformationen umfasst, wobei die zeitabhängigen Reifeninformationen ausgewählt sind aus der Gruppe bestehend aus Radlast, Radialbeschleunigung, Laufleistung und mit diesen Größen korrelierenden Informationen,
wobei die elektronische Sendeeinheit jedes Systemfahrzeugreifens dazu eingerichtet ist, die für den Systemfahrzeugreifen bestimmten zeitabhängigen Reifeninformationen an die Empfangseinheit zu senden,
wobei die elektronische Auswerteeinheit dazu eingerichtet ist, die Positionsverteilung der elektronischen Sendeeinheiten auf die Systemfahrzeugreifen aus den Signalinformationen unter Berücksichtigung von vorgegebenen Reifenplätzen in einem Reifenplan des Fahrzeugs zu bestimmen, und die elektronischen Sendeeinheiten in den Systemfahrzeugreifen den vorgegebenen Reifenplätzen zuzuordnen, wobei zumindest einem Teil der vorgegebenen Reifenplätze bezüglich der zeitabhängigen Reifeninformationen Zuordnungskriterien zugewiesen sind, die für die von einer elektronischen Sendeeinheit gesendeten zeitabhängigen Reifeninformationen erfüllt sein müssen, damit die elektronische Auswerteeinheit die elektronische Sendeeinheit dem Reifenplatz zuweisen kann.

Das erfindungsgemäße Fahrzeugsystem umfasst ein Fahrzeug und ein System zur Bestimmung der Positionsverteilung von elektronischen Sendeeinheiten in den Fahrzeugreifen an diesem Fahrzeug. Bei dem Fahrzeug kann es sich prinzipiell um ein angetriebenes oder ein nicht angetriebenes Fahrzeug, beispielsweise einen Anhänger, jedoch auch um einen Zug aus angetriebenem Fahrzeug und einem Anhänger, handeln. Das Fahrzeug kann prinzipiell jedes Fahrzeug mit sechs oder mehr Reifen sein. Beispielhaft ist ein erfindungsgemäßes Fahrzeugsystem, wobei das Fahrzeug drei oder mehr Achsen umfasst. Beispielhaft ist auch ein erfindungsgemäßes Fahrzeugsystem, wobei das Fahrzeug ein Nutzfahrzeug ist, bevorzugt ein LKW oder ein Bus.

Das System zur Bestimmung der Positionsverteilung von elektronischen Sendeeinheiten in den Fahrzeugreifen ist dazu eingerichtet, für entsprechend ausgerüstete Fahrzeugreifen, die im Rahmen der vorliegenden Erfindung zum Zwecke der Zuordnung als Systemfahrzeugreifen bezeichnet werden, zu bestimmen, welche Sendeeinheit in welchem Systemfahrzeugreifen angeordnet ist.

Im Rahmen der vorliegenden Erfindung wird von der Bestimmung der Positionsverteilung von elektronischen Sendeeinheiten gesprochen, da strenggenommen die Position eben dieser Sendeeinheiten in dem signalstärkebasierten Verfahren bestimmt wird. Da die Sendeeinheiten in der Praxis aber jeweils Systemfahrzeugreifen zugeordnet sind, dient das System mittelbar auch der Bestimmung der Positionsverteilung von Systemfahrzeugreifen im Fahrzeugsystem. Der Fachmann versteht, dass den Systemfahrzeugreifen neben den elektronischen Sendeeinheiten auch elektronische Sensoren zugeordnet sind. Neben der Positionsverteilung von elektronischen Sendeeinheiten bzw. der Systemfahrzeugreifen erfolgt somit zumindest mittelbar auch eine Bestimmung der Positionsverteilung der Sensoreinheiten, so dass die von den Sensoreinheiten detektierten Reifeninformationen den Systemfahrzeugreifen zugeordnet werden können. Dies gilt insbesondere für den besonders bevorzugten Fall, dass die Sensoreinheiten und die Sendeeinheiten durch die gleichen elektronischen Baueinheit gebildet werden.

Das Fahrzeugsystem umfasst am Fahrzeug angeordnet zumindest sechs Systemfahrzeugreifen. Der Ausdruck Systemfahrzeugreifen bringt dabei zum Ausdruck, dass diese Fahrzeugreifen für den Einsatz in dem erfindungsgemäßen Fahrzeugsystem ausgerüstet sind und jeweils insbesondere eine elektronische Sensoreinheit und eine elektronische Sendeeinheit umfassen. Somit unterscheiden sich die Systemfahrzeugreifen von anderen Fahrzeugreifen, die die entsprechende Funktionalität nicht aufweisen. Der Fachmann versteht, dass das erfindungsgemäße Fahrzeugsystem neben Systemfahrzeugreifen auch weitere Fahrzeugreifen umfassen kann, die beispielsweise über gar keine Sensorik verfügen, beispielsweise in der Form von Reserverädern, dass diese aber nicht in das entsprechende Verfahren zur Bestimmung einbezogen werden. In diesem Fall würde es sich um ein erfindungsgemäßes Fahrzeugsystem handeln, wobei das Fahrzeug neben Systemfahrzeugreifen weitere Fahrzeugreifen umfasst, bei denen es sich nicht um Systemfahrzeugreifen handelt.

Auch wenn prinzipiell auch für andere Konstruktionsweisen von Fahrzeugreifen eine Sender- und Sensorbestückung denkbar ist, ist für die meisten Fälle ein erfindungsgemäßes Fahrzeugsystem relevant, wobei die Systemfahrzeugreifen Fahrzeugluftreifen sind.

Gerade für Fahrzeuge mit einer Vielzahl von Fahrzeugreifen ist die zuverlässige Bestimmung der Positionsverteilung regelmäßig schwierig. Die damit verknüpften Probleme und Unsicherheiten bei der Zuordnung nehmen bei den aus dem Stand der Technik bekannten Verfahren dabei häufig mit der Zahl der zuzuordnenden Reifenplätze zu. In vorteilhafter Weise ist dies in dem erfindungsgemäßen Fahrzeugsystem aber durch die zusätzliche Berücksichtigung der Reifeninformationen und des Reifenplans auch in Fahrzeugsystemen mit vielen Fahrzeugreifen effizienter möglich, so dass sich in solchen Fahrzeugsystemen die Vorteile besonders ausgeprägt zeigen. Entsprechend ist ein erfindungsgemäßes Fahrzeugsystem bevorzugt, wobei das Fahrzeugsystem acht oder mehr, bevorzugt zehn oder mehr, Systemfahrzeugreifen umfasst. Bevorzugt ist zusätzlich oder alternativ ein erfindungsgemäßes Fahrzeugsystem, wobei das Fahrzeugsystem zumindest eine Achse mit drei oder mehr, bevorzugt 4 oder mehr, Systemfahrzeugreifen umfasst. Bevorzugt ist zusätzlich oder alternativ auch ein erfindungsgemäßes Fahrzeugsystem, wobei das Fahrzeug zumindest eine Lift-Achse umfasst.

Die Systemfahrzeugreifen umfassen jeweils eine elektronische Sendeeinheit zum Senden von Signalen in einem drahtlosen Übertragungsverfahren. Dazu komplementär umfasst das erfindungsgemäße Fahrzeugsystem eine elektronische Empfangseinheit, die mit den elektronischen Sendeeinheiten kommunizieren kann. Der Fachmann versteht, dass die Sendeeinheiten und die Empfangseinheit entsprechend mit einem aufeinander abgestimmten drahtlosen Übertragungsverfahren arbeiten. Hierbei sind nach Einschätzung der Erfinder insbesondere funkbasierte Verfahren geeignet. Bevorzugt ist somit ein erfindungsgemäßes System, wobei die Empfangseinheit eine Funkeinheit zum Empfangen von Signalen mittels Funktechnik ist, beispielsweise mittels Bluetooth, LTE oder 5G, bevorzugt mittels Bluetooth. Bevorzugt ist entsprechend auch ein erfindungsgemäßes System, wobei die elektronischen Sendeinheiten Funkeinheiten zum Senden von Signalen mittels Funktechnik sind, beispielsweise mittels Bluetooth, LTE oder 5G, bevorzugt mittels Bluetooth. Grundsätzlich kann für die drahtlose Kommunikation eine breite Spanne an möglichen Frequenzbereichen zum Einsatz kommen, beispielsweise aus dem Bereich der Hochfrequenz. Bevorzugt ist ebenfalls ein erfindungsgemäßes System, wobei die Empfangseinheiten und die Sendeinheiten mit einer Frequenz im Bereich von 300 bis 450 MHz, kommunizieren.

Für die grundsätzliche Funktionalität bei der Bestimmung der Positionsverteilung von elektronischen Sendeeinheiten setzt das erfindungsgemäße Fahrzeugsystem auf den Umstand, dass die Signalstärke des von den Sendeeinheiten gesendeten Signals, welches an der Empfangseinheit registriert wird, von dem Abstand zwischen der Sendeeinheit und der Empfangseinheit abhängig ist. Der so erhaltene Satz an Signalinformationen wird durch die elektronische Auswerteeinheit ausgewertet.

Die Systemfahrzeugreifen umfassend jeweils zumindest eine elektronische Sensoreinheit zum Bestimmen einer oder mehrerer dem jeweiligen Systemfahrzeugreifen zugeordneter zeitabhängigen Reifeninformationen, die im erfindungsgemäßen Fahrzeugsystem bzw. in dem erfindungsgemäßen Verfahren zusammen mit den Signalinformationen über die Signalstärken nach Art einer weiteren Randbedingung verwendet werden, um die Positionsverteilung der elektronischen Sendeeinheiten in den Fahrzeugreifen am Fahrzeug zu bestimmen.

Bei den Reifeninformationen handelt es sich um zeitabhängige Reifeninformationen, wobei die Zeitabhängigkeit zumindest grundsätzlich zunächst breit verstanden werden sollte. Im einfachsten Fall kann es sich beispielsweise um eine Vielzahl an diskreten Werten mit Zeitstempel handeln. Beispielsweise kann die Reifeninformation in zeitlichen Abständen von 16 s oder mehr, bevorzugt 32 s oder mehr, oder sogar 128 s oder mehr aufgenommen werden, insbesondere wenn die verfügbaren Energiespeicher der Sensoreinheiten geschont werden sollen. Bevorzugt ist es jedoch, wenn die Reifeninformationen kontinuierlicher, bevorzugt mit einer vergleichsweise hohen Messfrequenz detektiert werden, beispielsweise mit einer Messfrequenz von 1 Hz oder mehr, bevorzugt von 5 Hz oder mehr, besonders bevorzugt von 10 Hz oder mehr, um eine mehr oder weniger kontinuierliche Kurve zu erhalten.

Die zusätzlichen Sensordaten werden im Rahmen der Erfindung dafür genutzt, die Positionsverteilung der elektronischen Sendeeinheiten zu korrigieren und/oder zu optimieren. Hierfür erfolgt die Bestimmung der Positionsverteilung der elektronischen Sendeeinheiten aus den Signalinformationen unter Berücksichtigung von vorgegebenen Reifenplätzen in einem Reifenplan, welcher beispielsweise auf der Speichereinheit gespeichert sein kann. Die Auswerteeinheit kennt somit die möglichen Reifenplätze, die es in dem entsprechenden Fahrzeug gibt, beispielsweise "Frontachse/links" und "Frontachse/rechts". Entsprechend muss die Auswerteeinheit die Positionsverteilung aus den Signalinformationen nicht völlig isoliert berechnen, sondern muss die Sendeeinheiten, und damit mittelbar auch die Systemfahrzeugreifen und die Sensoreinheiten, nur einer vorgegebenen Zahl von Reifenplätzen zuordnen, deren Abstandsverteilung zur Empfangseinheit zumindest näherungsweise bekannt ist.

Diese effiziente Verfahrensführung durch die Auswerteeinheit wird im Rahmen der vorliegenden Erfindung dadurch unterstützt, dass den Reifenplätzen Zuordnungskriterien zugeordnet sind. Hierbei handelt es sich um Maßgaben bzw. Kriterien, die die zeitabhängigen Reifeninformationen eines Systemfahrzeugreifens, die von der entsprechenden elektronischen Sendeeinheit gesendet werden, erfüllen müssen, damit die Auswerteeinheit die zugehörige Sendeeinheit (und damit letztlich den gesamten Systemfahrzeugreifen) in der Positionsverteilung dem Reifenplatz zuweisen kann.

Hierdurch ist es in vorteilhafter Weise möglich, eine fehlerhafte Zuweisung durch ein zusätzliches Sensorkriterium zu verhindern. Zudem kann die Zahl der für einen Reifenplatz in Frage kommenden Sendeeinheiten vor der Auswertung reduziert werden, beispielsweise wenn nur vier von sechs Systemfahrzeugreifen das Zuordnungskriterium des entsprechenden Reifenplatzes erfüllen, wodurch der Bedarf an Rechenleistung für die Zuordnungsoperation reduziert werden kann.

Die elektronischen Sensoreinheiten bestimmen als zeitabhängige Reifeninformationen eine oder mehrere Größen, die ausgewählt sind aus der Gruppe bestehend aus Radlast, Radialbeschleunigung, Laufleistung und mit diesen Größen korrelierenden Informationen. Der Fachmann versteht insoweit, dass diese Formulierung selbstverständlich auch die Bestimmung von Parametern umfasst, die von den Größen Radlast, Radialbeschleunigung und Laufleistung abgeleitet sind, so dass beispielsweise auch zeitliche Ableitungen dieser Größen umfasst sind. Insbesondere ist es nicht nötig, absolute Werte zu bestimmen, da die Messung relativer Änderungen über die Zeit in vielen Fällen ausreichend ist. Bevorzugt ist ein erfindungsgemäßes Fahrzeugsystem, wobei die zeitabhängigen Reifeninformationen ausgewählt sind aus der Gruppe bestehend aus Radlast, Radialbeschleunigung und Laufleistung.

Den Erfindern ist es gelungen, für jede dieser zeitabhängigen Reifeninformationen besonders bevorzugte Anwendungsfälle zu identifizieren.

In einer ersten bevorzugten Ausführungsform messen die Reifensensoren über einen geeigneten Prozess die Radlast oder eine mit der Radlast korrelierte Größe, beispielsweise über eine Messung der Latschbreite des Fahrzeugreifens, welche beispielsweise über einen im Reifenaufstandsbereich angeordneten Beschleunigungssensor bestimmt werden kann, in Zusammenhang mit der Temperatur und dem Reifendruck.. Diese Lastinformation kann nun mit der Stärke des Funksignals kombiniert werden, um die automatische Zuordnung zu den Reifenplätzen signifikant zu verbessern. Hierzu wird der zeitliche Verlauf der Radlast berücksichtigt. Bei üblichen Nutzfahrzeugen variiert die Last auf der gelenkten, vorderen Achse nämlich im Betrieb kaum, die Last auf der beziehungsweise den hinteren Achsen variiert jedoch im täglichen Einsatz je nach Beladung sehr stark. Durch Berücksichtigung der gemessenen Last kann somit eindeutig zwischen Vorderachse und den Hinterachsen unterschieden werden. Weiterhin kann durch Vergleiche des zeitlichen Verhaltens festgestellt werden, welche Reifensensoren in Reifen auf der gleichen Achse montiert sind, da die Laständerung auf einer Achse sich in der Regel auf alle Reifen dieser Achse gleich auswirkt, so dass das Zuordnungskriterium beispielsweise so ausgestaltet werden kann, dass der relative Unterschied in der Radlast sich für zwei Reifenplätze nur zu einem gewissen Maß unterscheiden darf. Insbesondere eignet sich eine zeitabhängige Reifeninformation, welche zeitabhängige Daten zur Radlast umfasst, besonders gut, um Sendeeinheiten zuverlässig Liftachsen zuzuordnen. Bevorzugt ist in diesem Fall ein erfindungsgemäßes Fahrzeugsystem, wobei die zeitabhängigen Reifeninformationen die Radlast und/oder mit der Radlast korrelierende Informationen umfassen, und bevorzugt aus der Radlast und/oder mit der Radlast korrelierenden Informationen bestehen. Besonders bevorzugt ist hierfür ein erfindungsgemäßes Fahrzeugsystem, wobei die elektronischen Sensoreinheiten einen Beschleunigungssensor oder einen Drucksensor, sowie bevorzugt einen Temperatursensor, umfassen. Besonders bevorzugt ist insoweit ein erfindungsgemäßes Fahrzeugsystem, wobei das Zuordnungskriterium umfasst, dass bestimmte Reifenplätze eine besonders große oder besonders kleine Variation der Radlast mit der Zeit zeigen. Besonders bevorzugt ist insoweit zusätzlich oder alternativ ein erfindungsgemäßes Fahrzeugsystem, wobei das Zuordnungskriterium umfasst, dass Reifenplätze auf Liftachsen zumindest teilweise keine Radlast aufweisen und/oder Reifenplätze auf nicht-Liftachsen im Wesentlichen immer eine Mindestradlast aufweisen.

In einer zweiten bevorzugten Ausführungsform, welche zusätzlich oder alternativ zu der ersten Ausführungsform eingesetzt werden kann, messen die Reifensensoren die Radialbeschleunigung der Systemfahrzeugreifen.

Insbesondere bei Fahrzeugen mit Liftachsen kann die Radialbeschleunigung genutzt werden, um Reifensensoren den Positionen auf der Liftachse zuzuordnen, sobald die Liftachse angehoben ist. In diesem Fall ist die Radialbeschleunigung null, bzw. in der Größenordnung der Erdbeschleunigung, während die Radialbeschleunigung der anderen Reifen sich mit der gefahrenen Geschwindigkeit ändert. Diese Information kann nun zur genaueren Positionsbestimmung genutzt werden. Bevorzugt ist in diesem Fall ein erfindungsgemäßes Fahrzeugsystem, wobei die zeitabhängigen Reifeninformationen die Radialbeschleunigung und/oder mit der Radialbeschleunigung korrelierende Informationen umfassen, und bevorzugt aus der Radialbeschleunigung und/oder mit der Radialbeschleunigung korrelierenden Informationen bestehen. Besonders bevorzugt ist dabei ein erfindungsgemäßes Fahrzeugsystem, wobei die elektronischen Sensoreinheiten einen Beschleunigungssensor umfassen. Besonders bevorzugt ist dabei zusätzlich oder alternativ ein erfindungsgemäßes Fahrzeugsystem, wobei das Zuordnungskriterium umfasst, dass Reifenplätze auf Liftachsen zumindest teilweise keine Radialbeschleunigung aufweisen, wenn zeitgleich Reifenplätze auf nicht-Liftachsen eine Radialbeschleunigung aufweisen.

In einer dritten bevorzugten Ausführungsform, welche wiederum zusätzlich oder alternativ zu der ersten und zweiten Ausführungsform eingesetzt werden kann, messen die Reifensensoren über einen geeigneten Prozess die von dem jeweiligen Systemfahrzeugreifen gefahrene Strecke, d.h. dessen Laufleistung. Dies kann beispielsweise durch die Messung der Radialbeschleunigung und Extrapolation dieses Messwerts auf die Geschwindigkeit durch den Zusammenhang zwischen Radialbeschleunigung und Rotationsgeschwindigkeit der Reifen sowie Integration der Geschwindigkeit über die Zeit erfolgen. Zusätzlich oder alternativ kann die Bestimmung angesichts der regelmäßig bekannten Dimensionen der Fahrzeugreifen jedoch auch durch Umdrehungszähler erfolgen. Die Laufleistung kann dabei sowohl absolut auf die insgesamt angesammelte Laufleistung als auch auf kleinere Zeiteinheiten bezogen werden, beispielsweise Tage, Wochen oder Monate. Aufgrund von Fahrmanövern und unterschiedlichem Schlupf auf unterschiedlichen Positionen weicht die von den Sensoren gemessenen Laufleistung positions- oder achstypisch vom Mittelwert aller Fahrzeugreifen ab, wobei nach Einschätzung der Erfinder insbesondere der in einem Land herrschende Links- oder Rechtsverkehr in abweichenden Laufleistungen für die linken bzw. rechten Fahrzeugreifen resultiert, da in Abhängigkeit von der Verkehrsführung bestimmte Kurvenrichtungen häufiger sind, beispielsweise bei Autobahnzufahrten, wodurch die seitenspezifische Laufleistung beeinflusst wird. Insbesondere eignet sich auch eine zeitabhängige Reifeninformation, welche zeitabhängige Daten zur Laufleistung umfasst, besonders gut, um Sendeeinheiten zuverlässig Liftachsen zuzuordnen. Bevorzugt ist hierfür ein erfindungsgemäßes Fahrzeugsystem, wobei die zeitabhängigen Reifeninformationen die Laufleistung und/oder mit der Laufleistung korrelierende Informationen umfassen, und bevorzugt aus der Laufleistung und/oder mit der Laufleistung korrelierenden Informationen bestehen. Bevorzugt ist hierfür ein erfindungsgemäßes Fahrzeugsystem, wobei die elektronischen Sensoreinheiten einen Beschleunigungssensor oder einen Umdrehungszähler umfassen. Besonders bevorzugt ist ein erfindungsgemäßes Fahrzeugsystem, wobei das Zuordnungskriterium umfasst, dass bestimmte Reifenplätze eine größere Laufleistung zeigen als andere Reifenplätze. Besonders bevorzugt ist zusätzlich oder alternativ ein erfindungsgemäßes Fahrzeugsystem, wobei das Zuordnungskriterium umfasst, dass Reifenplätze auf Liftachsen eine niedrigere Laufleistung zeigen als Reifenplätze auf nicht-Liftachsen.

Aus den vorstehenden Ausführungen ist ersichtlich, dass insbesondere der Einsatz von Beschleunigungssensoren die Aufnahme einer breiten Palette an zeitabhängigen Reifeninformationen erlaubt, die in vorteilhafter Weise genutzt werden können. Besonders bevorzugt ist demnach auch ein erfindungsgemäßes Fahrzeugsystem, wobei die elektronischen Sensoreinheiten einen Beschleunigungssensor umfassen.

Beim Einsatz von Beschleunigungssensoren kann zudem durch eine Messung der Radialbeschleunigung zum Zeitpunkt der gewünschten Emission von Funksignalen festgestellt werden, wann der Reifensensor sich in der Bodenaufstandsfläche befindet. Diese Information kann genutzt werden, um das Funksignal immer an einer definierten Position auszusenden. Dadurch wird die Positionsbestimmung mit Funkstärkenanalyse genauer, da der Abstand zwischen Sensor und Empfänger am Fahrzeug besser eingegrenzt werden kann, so dass die Emission nicht mehr oder weniger zufällig gegenüber der Winkelposition des Sensors erfolgt, in welchem Fall die Abstände zwischen Sendeeinheit und Empfänger bei typischen Nutzfahrzeugreifen beispielsweise um bis zu 1 m abweichen können. Besonders bevorzugt ist demnach ein erfindungsgemäßes Fahrzeugsystem, wobei die elektronischen Sensoreinheiten dazu eingerichtet sind, das Senden von Signalen in Abhängigkeit der mittels der Sensoreinheit bestimmten Radialbeschleunigung zu steuern.

Die Zuordnungskriterien können erfahrungsbasiert vorgegeben werden, beispielsweise zur Identifikation von Reifenplätzen auf Liftachsen. Zusätzlich oder alternativ ist es aber besonders bevorzugt, die Zuordnungskriterien mit bekannten Sensoranordnungen in einer praktischen Anlernphase am Fahrzeug zu bestimmen. Bevorzugt ist entsprechend ein erfindungsgemäßes Fahrzeugsystem, wobei das Zuordnungskriterium durch Auswertung von während einer Anlernphase im Betrieb des Fahrzeugsystems detektierten Reifeninformationen für eine bekannte Positionsverteilung der Systemfahrzeugreifen festgelegt wird, wobei die Anlernphase bevorzugt eine Fahrstrecke von 500 km oder mehr, bevorzugt von 1000 km oder mehr, besonders bevorzugt von 2000 km oder mehr, umfasst.

Das Länge des Beobachtungsintervalls der zeitabhängigen Reifeninformationen, welches von der Auswerteeinheit berücksichtigt wird, passt der Fachmann zwanglos auf die von ihm verwendeten Sensoreinheiten und Reifeninformationen an, wobei das Beobachtungsintervall insbesondere durch die Zuordnungskriterien vorgegeben werden kann, welche beispielsweise derart gewählt werden, dass sich die zeitabhängige Reifeninformation in einem bestimmten Zeitraum in bestimmter Weise verändern soll. Für manche zeitabhängigen Reifeninformationen wird der Fachmann dabei naturgemäß größere Beobachtungsintervalle anlegen, beispielsweise wenn Unterschiede in der Laufleistung von Fahrzeugreifen berücksichtigt werden sollen, welche sich in Folge eines Rechts- oder Linksverkehrs ergeben und sich in vielen Fällen erst nach längeren Beobachtungszeiträumen herauskristallisieren.

Nach Einschätzung der Erfinder ist es zweckmäßig, die Sensoreinheit bzw. die Sendeeinheit im Inneren der Fahrzeugreifen anzuordnen. Bevorzugt ist entsprechend ein erfindungsgemäßes Fahrzeugsystem, wobei die Sensoreinheit und/oder die Sendeeinheit, bevorzugt die Sensoreinheit und die Sendeeinheit, zumindest teilweise, bevorzugt sämtlich, im Inneren der Systemfahrzeugreifen angeordnet sind, wobei die Sensoreinheit und/oder die Sendeeinheit bevorzugt an der Reifeninnenschicht befestigt oder in den Gummiwerkstoff eingebettet sind.

Der Fachmann versteht, dass das erfindungsgemäße Fahrzeugsystem bzw. das erfindungsgemäße Verfahren umso leistungsfähiger wird, umso geringer der Einfluss von sonstigen Störfaktoren oder Abweichungen ist, die bei der Bestimmung berücksichtigt werden müssen. Entsprechend sollten nach Einschätzung der Erfinder vermeidbare Störfaktoren bestmöglich vermieden werden. Hierzu zählt insbesondere, dass naturgemäß Sendeeinheiten mit möglichst gleichen Ausgangssignalstärken eingesetzt werden sollten, die zweckmäßigerweise auch an möglichst ähnlichen Positionen in den Systemfahrzeugreifen platziert werden sollten. Zugleich sollten auch die Reifeninformationen möglichst an den gleichen Stellen der jeweiligen Fahrzeugreifen gesammelt werden, um Unterschiede, die sich zwischen den Reifenplätzen ergeben, nicht durch Anordnungseffekte im Reifen zu kaschieren. In Übereinstimmung mit dem fachmännischen Verständnis bezieht sich die gleiche Anordnung in den weitgehend rotationssymmetrischen Fahrzeugreifen auf die Positionierung entlang der axialen und/oder radialen Richtung sowie die etwaige Anordnung relativ zu anderen Komponenten, beispielsweise die Anordnung auf der Reifeninnenschicht im Bereich des Laufstreifen im Vergleich zur Anordnung an der äußeren Seitenwand, und nicht auf die Anordnung relativ zur Umfangsrichtung. Bevorzugt ist entsprechend ein erfindungsgemäßes Fahrzeugsystem, wobei die Sendeeinheiten dazu eingerichtet sind, Signale mit einer Ausgangssignalintensität zu senden, die sich zwischen den Sendeeinheiten der unterschiedlichen Systemfahrzeugreifen um weniger als 10 %, bevorzugt um weniger als 5 %, besonders bevorzugt um weniger als 1 %, ganz besonders bevorzugt um weniger als 0,5 %, unterscheidet. Bevorzugt ist zusätzlich oder alternativ ein erfindungsgemäßes Fahrzeugsystem, wobei die Sensoreinheiten zumindest teilweise, bevorzugt sämtlich, an der gleichen Position des jeweiligen Systemfahrzeugreifens angeordnet sind, bezogen auf die radiale und/oder axiale Richtung. Bevorzugt ist zusätzlich oder alternativ zudem ein erfindungsgemäßes Fahrzeugsystem, wobei die Sendeeinheiten zumindest teilweise, bevorzugt sämtlich, an der gleichen Position des jeweiligen Systemfahrzeugreifens angeordnet sind, bezogen auf die radiale und/oder axiale Richtung.

Im Lichte der vorstehenden Ausführungen kann es als besonderer Vorteil der Erfindung gesehen werden, dass für die verschiedenen Sendeeinheiten im Wesentlichen gleichartige Sendeeinheiten eingesetzt werden können. Zudem lassen sich vorteilhafterweise auch baugleiche Sensoren einsetzten. Hierdurch werden nicht nur die Herstellungskosten und der Ausrüstungsaufwand reduziert, sondern zudem lassen sich Unterschiede in der Signalstärke bzw. den gemessenen Reifeninformationen besonders zuverlässig einer unterschiedlichen Positionierung in der Reifenanordnung des Fahrzeugs zuweisen. Bevorzugt ist entsprechend ein erfindungsgemäßes Fahrzeugsystem, wobei die Sensoreinheiten zumindest teilweise, bevorzugt sämtlich, die gleiche Bauart aufweisen. Bevorzugt ist zusätzlich oder alternativ ein erfindungsgemäßes Fahrzeugsystem, wobei die Sendeeinheiten zumindest teilweise, bevorzugt sämtlich, die gleiche Bauart aufweisen.

Der Fachmann versteht, dass das von den Sendeeinheiten zum Zwecke der Bestimmung der Signalinformation gesendete Signal prinzipiell eine beliebige Information umfassen kann, so lange die Empfangseinheit in die Lage versetzt wird, die Signalstärke zu bestimmen. Zweckmäßigerweise sollte für das erfindungsgemäße Verfahren aber beispielsweise das Signal für die Bewertung der Signalstärke verwendet werden, mit dem die Sendeeinheit die Reifeninformation an die Empfangseinheit übermittelt, damit diese sie an die elektronische Auswerteeinheit weiterleiten kann.

Als besonders bevorzugte Ausführungsform schlagen die Erfinder vor, dass mit Blick auf die benötigten Bauteile, den notwendigen Ausrüstungsaufwand der Systemfahrzeugreifen und die erhaltbare Datenqualität, ein besonders vorteilhaftes Fahrzeugsystem erhalten wird, wenn die Sensoreinheit und die Sendeeinheit in das gleiche Bauteil integriert werden. Besonders bevorzugt ist demgemäß ein erfindungsgemäßes Fahrzeugsystem, wobei die Sendeeinheit und die Sensoreinheit, jeweils durch die gleiche Einheit gebildet werden, wobei die zeitabhängige Reifeninformation bevorzugt mittels der Sendeeinheit an die Empfangseinheit übermittelt wird.

In der Praxis ist die Anordnung von Fahrzeugreifen in einem Fahrzeugsystem zumeist weitgehend symmetrisch. Dadurch ist bedingt, dass es in vielen Fällen zwei Systemfahrzeugreifen geben wird, die sich nur schwer voneinander unterscheiden lassen. Diese Problematik kann vorteilhafterweise dadurch adressiert werden, dass in dem vorstehend beschriebenen erfindungsgemäßen Fahrzeugsystem über die Positionierung der Empfangseinheit eine gezielte Asymmetrie erzeugt wird, durch die die einzelnen Systemfahrzeugreifen einer symmetrischen Reifenanordnung einen unterschiedlichen Abstand zu der Empfangseinheit aufweisen, die infolgedessen eine unterschiedliche Signalstärke detektieren kann. Besonders bevorzugt ist entsprechend ein erfindungsgemäßes Fahrzeugsystem, wobei die Empfangseinheit so angeordnet ist, dass sämtliche Systemfahrzeugreifen einen unterschiedlichen Abstand zu der Empfangseinheit aufweisen.

Zusätzlich oder alternativ ist es, insbesondere bei sehr langen Fahrzeugen mit einer großen Zahl an Systemfahrzeugreifen, wie beispielsweise LKW mit Anhänger oder Gelenkbusse, auch bevorzugt zwei oder mehr voneinander beabstandete Empfangseinheiten einzusetzen. Hierdurch wird nicht nur besonders zuverlässig sichergestellt, dass alle Signale korrekt empfangen werden, sondern es werden für die Sendeeinheiten auch jeweils zwei mit Abständen korrelierende Signalstärken erhalten, wodurch die Positionsverteilung von elektronischen Sendeeinheiten in Anlehnung an das Konzept der Triangulation noch zuverlässiger bestimmt werden kann. Bevorzugt ist entsprechend auch ein erfindungsgemäßes Fahrzeugsystem, wobei das System zwei oder mehr voneinander beabstandete, bevorzugt entlang der Fahrzeugachse beabstandete, Empfangseinheiten umfasst.

Die Empfangseinheit dient dazu, für jeden Systemfahrzeugreifen die Signalinformation aus den Signalstärken der von den elektronischen Sendeeinheiten gesendeten Signalen zu ermitteln und dabei bevorzugt auch die zeitabhängigen Reifeninformation zu empfangen. Die Empfangseinheit ist dazu eingerichtet, diese an die elektronische Auswerteeinheit zu übermitteln. Diese Übermittlung kann dabei direkt oder indirekt erfolgen, beispielsweise indem die Empfangseinheit die entsprechenden Informationen zunächst an eine zwischengeschaltete Einheit, beispielsweise an eine Kommunikationseinheit oder eine sogenannte Telematik übermittelt, die die Informationen anschließend an die elektronische Auswerteeinheit weiterleiten. Eine entsprechende Ausgestaltung ist vor allem dann zweckmäßig, wenn die Empfangseinheit selbst keine ausreichenden Kapazitäten zum Senden der Informationen in einem drahtlosen Übertragungsverfahren umfasst, die geeignet sind, die Daten beispielsweise über ein Funknetzwerk über lange Strecken zu übertragen. Bevorzugt umfasst die Empfangseinheit jedoch selbst Mittel zur direkten Übertragung der entsprechenden Informationen. Bevorzugt ist ein erfindungsgemäßes Fahrzeugsystem, wobei die Empfangseinheit dazu eingerichtet ist, die zeitabhängigen Reifeninformationen und die Signalinformationen mit einem drahtlosen Kommunikationsverfahren an die elektronische Auswerteeinheit zu übermitteln.

Die Auswerteeinheit ist im erfindungsgemäßen Fahrzeugsystem dazu vorgesehen, die notwendigen Rechenoperationen auszuführen, um aus den Signalinformationen die Positionsverteilung der elektronischen Sendeeinheiten der Systemfahrzeugreifen unter Berücksichtigung von vorgegebenen Reifenplätzen in einem Reifenplan des Fahrzeugs abzuleiten. Die Auswerteeinheit kann beispielsweise in dem Fahrzeug angeordnet sein und beispielsweise auch durch die gleiche elektronische Datenverarbeitungsvorrichtung gebildet werden, die auch die Empfangseinheit steuert. Bevorzugt kann jedoch auch auf eine zentrale Auswerteeinheit zurückgegriffen werden, die die notwendigen Informationen drahtlos von der Empfangseinheit übermittelt bekommt, was insbesondere im Flottenmanagement großer Nutzfahrzeugflotten Vorteile bietet. Bevorzugt ist ein erfindungsgemäßes Fahrzeugsystem, wobei die elektronische Auswerteeinheit am Fahrzeug angeordnet ist, wobei die elektronische Auswerteeinheit und die Empfangseinheit bevorzugt durch die gleiche Vorrichtung gebildet werden. Bevorzugt ist alternativ ein erfindungsgemäßes Fahrzeugsystem, wobei die elektronische Auswerteeinheit durch eine außerhalb des Fahrzeuges befindliche Datenverarbeitungsvorrichtung gebildet wird, bevorzugt durch eine zentrale Datenverarbeitungsvorrichtung eines Netzwerkes oder die Datenverarbeitungsvorrichtung einer lokalen Auswerteeinrichtung.

Die Bestimmung der Position von Sendeeinheiten, und damit mittelbar der Sensoreinheiten und der Systemfahrzeugreifen, in der Reifenanordnung durch die Auswerteeinheit ausgehend von den Signalinformationen stellt den Fachmann in Ansehen der Erfindung in der Umsetzung nicht vor übermäßig große Schwierigkeiten, insbesondere da vorgegebenen Reifenplätzen in einem Reifenplan des Fahrzeugs als Randparameter vorgegeben werden. Gerade angesichts der zumeist doch noch überschaubaren Zahl von Fahrzeugreifen in typischen Fahrzeugen wird eine endliche Zahl von Datensätzen mit einer endlichen Zahl von Signalstärken erhalten, wobei moderne Datenverarbeitungsvorrichtungen leicht die notwendige Lösung des zugrundeliegenden Logik- bzw. Zuweisungsproblems erhalten können. Neben einfachen iterativen Verfahren können hierbei beispielsweise auch komplexere Zuordnungsverfahren eingesetzt werden, die zumindest theoretisch auch auf maschinellem Lernen basieren können. Bevorzugt ist jedoch insoweit ein erfindungsgemäßes Fahrzeugsystem, wobei die elektronische Auswerteeinheit dazu eingerichtet ist, die Systemfahrzeugreifen in der Reifenanordnung durch ein iteratives Verfahren den Reifenplätzen zuzuordnen, wobei solche Zuordnungen ausgeschlossen werden, die die vorgegebenen Zuordnungskriterien hinsichtlich der zeitabhängigen Reifeninformationen nicht erfüllen.

Nach Einschätzung der Erfinder ist das erfindungsgemäße Fahrzeugsystem auch deshalb besonders vorteilhaft, weil es durch die Berücksichtigung der zeitabhängigen Reifeninformationen effizient dazu verwendet werden kann, eine veränderte Anordnung der Systemfahrzeugreifen zu detektieren, wenn nämlich die zeitabhängigen Reifeninformationen eines Fahrzeugreifen nicht mehr das entsprechende Zuordnungskriterium erfüllen. Bevorzugt ist demgemäß ein erfindungsgemäßes Fahrzeugsystem, wobei die elektronische Auswerteeinheit dazu eingerichtet ist, ausgehend von einer zuvor bestimmten Positionsverteilung eine Veränderung der Position der Systemfahrzeugreifen im Fahrzeugsystem durch eine Abweichung im Zuordnungskriterium eines oder mehrerer Reifenplätze festzustellen, bevorzugt festzustellen und durch eine Neubestimmung zu korrigieren.

Die Erfindung betrifft auch ein Verfahren zur Bestimmung der Positionsverteilung von elektronischen Sendeeinheiten in den Fahrzeugreifen in dem erfindungsgemäßen Fahrzeugsystem, umfassend für jeden Systemfahrzeugreifen die Verfahrensschritte:
x1) Bestimmen einer oder mehrerer dem Systemfahrzeugreifen zugeordneten zeitabhängigen Reifeninformationen mit der Sensoreinheit, wobei die zeitabhängigen Reifeninformationen ausgewählt sind aus der Gruppe bestehend aus Radlast, Radialbeschleunigung, Laufleistung und mit diesen Größen korrelierenden Informationen,
x2) Senden eines Signals mit der elektronischen Sendeeinheit des Systemfahrzeugreifens, wobei das Signal die zeitabhängigen Reifeninformationen umfasst,
x3) Empfangen des gesendeten Signals mit der Empfangseinheit und Erhalten einer dem Systemfahrzeugreifen zugeordneten Signalinformation aus der ermittelten Signalstärke sowie empfangen der dem Systemfahrzeugreifen zugeordneten zeitabhängigen Reifeninformationen,
sowie die Verfahrensschritte:
y) Übermitteln der zeitabhängigen Reifeninformationen und der Signalinformationen durch die Empfangseinheit an die elektronische Auswerteeinheit, und
z) Bestimmen der Positionsverteilung der elektronischen Sendeeinheiten der Systemfahrzeugreifen aus den Signalinformationen unter Berücksichtigung von vorgegebenen Reifenplätzen in einem Reifenplan des Fahrzeugs durch Zuordnen der elektronischen Sendeeinheiten der Systemfahrzeugreifen zu den vorgegebenen Reifenplätzen, wobei zumindest einem Teil der vorgegebenen Reifenplätze bezüglich der zeitabhängigen Reifeninformationen Zuordnungskriterien zugewiesen sind, wobei einem vorgegebenen Reifenplatz keine elektronischen Sendeeinheiten zugeordnet werden, deren gesendete zeitabhängige Reifeninformationen das Zuordnungskriterium nicht erfüllen.

Für die Praxis besonders relevant ist ein erfindungsgemäßes Verfahren, wobei das Verfahren im Fahrbetrieb des Fahrzeuges durchgeführt wird. Bevorzugt ist zusätzlich oder alternativ ein erfindungsgemäßes Verfahren, wobei das Verfahren in vorgegebenen zeitlichen Abständen wiederholt wird, um die Position der elektronischen Sendeeinheiten zu bestimmen.

Nachfolgend werden die Erfindung und bevorzugte Ausführungsformen der Erfindung unter Bezugnahme auf die beiliegende Figur näher erläutert und beschrieben. Dabei zeigt:

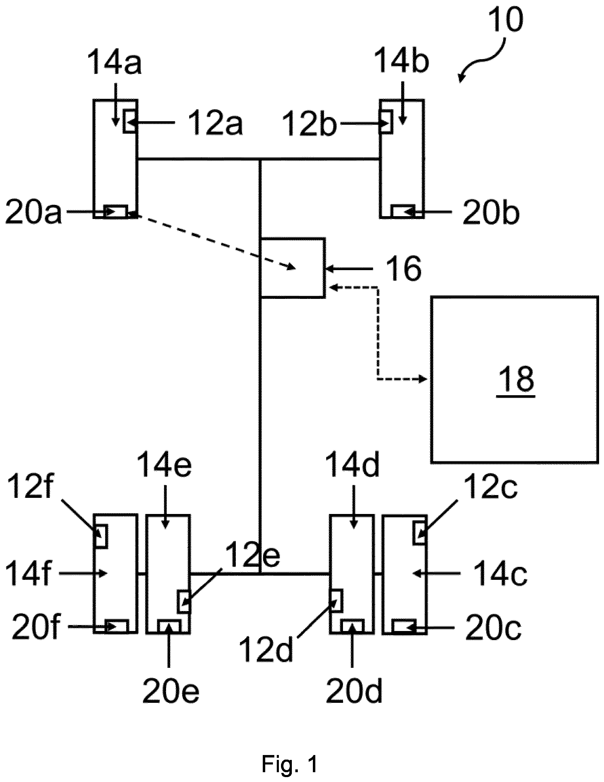

- Fig. 1: eine schematische Konzeptdarstellung eines erfindungsgemäßen Fahrzeugsystems in einer bevorzugten Ausführungsform.

Fig. 1 zeigt eine schematische Konzeptdarstellung eines erfindungsgemäßen Fahrzeugsystems 10 in einer bevorzugten Ausführungsform, bei dem sechs Systemfahrzeugreifen 14a, 14b, 14c, 14d, 14e, 14f eine Reifenanordnung eines Fahrzeuges bilden, wobei das Fahrzeug aus Gründen der Übersichtlichkeit nicht gezeigt ist. Die Systemfahrzeugreifen 14a-f sind an den Achsen des Fahrzeuges angeordnet, welches eine Achse mit Zwillingsbereifung aufweist und bei dem es sich beispielsweise um einen LKW handeln kann.

In dem beispielhaften Fahrzeugsystem 10 der Fig. 1 umfasst jeder Systemfahrzeugreifen 14a-f genau eine elektronische Sendeeinheit 12a, 12b, 12c, 12d, 12e, 12f, die über Funk mit der zentralen elektronischen Empfangseinheit 16 kommuniziert und die im Wesentlichen baugleich ausgeführt sind. In Fig. 1 ist am Beispiel des Systemfahrzeugreifens 14a der drahtlose Kommunikationspfad mit der Empfangseinheit 16 als gestrichelter Pfeil eingetragen.

Die Signalstärke der von den elektronischen Sendeeinheiten 12a-f ausgegebenen Signale wird von der relativ zur Fahrzeugachse versetzt angeordneten Empfangseinheit 16 registriert, so dass ein Satz von Signalinformationen erhalten wird, die von der elektronischen Auswerteeinheit 18 zur Bestimmung der Position der Fahrzeugreifen in der Reifenanordnung verwendet werden können, deren Reifenplan mit vorbestimmten Reifenplätzen der elektronischen Auswerteeinheit 18 auf der Speichereinheit vorliegt.

Zudem umfasst jeder Systemfahrzeugreifen 14a-f in dem beispielhaften Fahrzeugsystem 10 der Fig. 1 genau eine elektronische Sensoreinheit 20a, 20b, 20c, 20d, 20e, 20f, mit der jeweils eine zeitabhängige Reifeninformation bestimmt werden kann, die über die elektronischen Sendeeinheiten 12a-f an die Empfangseinheit 16 übermittelt werden. Im gezeigten Beispiel handelt es sich bei den elektronischen Sensoreinheiten 20a-f um Beschleunigungssensoren, über die als zeitabhängige Reifeninformation die Laufleistung und die Radialbeschleunigung detektiert werden.

In der schematischen Darstellung der Fig. 1 sind die elektronischen Sensoreinheiten 20a-f und die Sendeeinheiten 12a-f aus Gründen der besseren Unterscheidbarkeit voneinander separiert und an unterschiedlichen Positionen im Systemfahrzeugreifen 14a-f positioniert. Für im Wesentlichen alle Ausführungsformen bevorzugt ist es jedoch, wenn die elektronischen Sensoreinheiten 20a-f und die elektronischen Sendeeinheiten 12a-f in jedem Systemfahrzeugreifen 14a-f jeweils durch das gleiche elektronische Bauteil gebildet werden.

Im gezeigten Beispiel der Fig. 1 ist die elektronische Auswerteeinheit 18 außerhalb des Fahrzeuges angeordnet und wird durch einen Server gebildet, mit dem die elektronische Empfangseinheit 16 beispielsweise über Mobilfunk kommunizieren kann.

Die elektronische Auswerteeinheit 18 ist im gezeigten Beispiel dazu eingerichtet, die Positionsverteilung der elektronischen Sendeeinheiten 12a-f auf die Systemfahrzeugreifen 14a-f aus den Signalinformationen unter Berücksichtigung von vorgegebenen Reifenplätzen des Reifenplans mit einem iterativen Verfahren zu bestimmen, und die elektronischen Sendeeinheiten 12a-f in den Systemfahrzeugreifen 14a-f diesen vorgegebenen Reifenplätzen zuzuordnen. Hierbei umfasst die Speichereinheit der elektronischen Auswerteeinheit 18 für einen Teil der vorgegebenen Reifenplätze bezüglich der zeitabhängigen Reifeninformationen Zuordnungskriterien, beispielsweise über das zeitliche Integral der Laufleistung oder die Radialbeschleunigung. Die elektronische Auswerteeinheit 18 berücksichtigt in dem iterativen Verfahren nur Positionsverteilungen der elektronischen Sendeeinheiten 12a-f bzw. Zuweisungen einzelner elektronischer Sendeeinheiten 12a-f, bei denen die jeweiligen zeitabhängigen Reifeninformationen diese Zuordnungskriterien erfüllen.

### Bezugszeichenliste

- 10: Fahrzeugsystem
- 12a-f: Elektronische Sendeeinheit
- 14a-f: Systemfahrzeugreifen
- 16: Elektronische Empfangseinheit
- 18: Elektronische Auswerteeinheit
- 20a-f: Elektronische Sensoreinheit

## Patentansprüche

1. Fahrzeugsystem (10), umfassend:
a) ein Fahrzeug, und
b) ein System zur Bestimmung der Positionsverteilung von elektronischen Sendeeinheiten (12a-f) in Fahrzeugreifen am Fahrzeug, umfassend:
i) sechs oder mehr am Fahrzeug angeordnete Systemfahrzeugreifen (14a-f), wobei jeder Systemfahrzeugreifen (14a-f) eine elektronische Sendeeinheit (12a-f) zum Senden von Signalen in einem drahtlosen Übertragungsverfahren umfasst,
ii) eine zentrale elektronische Empfangseinheit (16) zum Empfangen von Signalen der elektronischen Sendeeinheiten (12a-f), und
iii) eine elektronische Auswerteeinheit (18) mit einer Speichereinheit, wobei die Empfangseinheit (16) dazu eingerichtet ist, die von den elektronischen Sendeeinheiten (12a-f) der Systemfahrzeugreifen (14a-f) gesendeten Signale zu empfangen und deren Signalstärke zu ermitteln, um eine dem jeweiligen Systemfahrzeugreifen (14a-f) zugeordnete Signalinformation zu erhalten,
wobei jedem Systemfahrzeugreifen (14a-f) eine elektronische Sensoreinheit (20a-f) zur Bestimmung einer oder mehrerer dem jeweiligen Systemfahrzeugreifen (14a-f) zugeordneter zeitabhängigen Reifeninformationen umfasst, wobei die zeitabhängigen Reifeninformationen ausgewählt sind aus der Gruppe bestehend aus Radlast, Radialbeschleunigung, Laufleistung und mit diesen Größen korrelierenden Informationen,
wobei die elektronische Sendeeinheit (12a-f) jedes Systemfahrzeugreifens (14a-f) dazu eingerichtet ist, die für den Systemfahrzeugreifen (14a-f) bestimmten zeitabhängigen Reifeninformationen an die Empfangseinheit (16) zu senden,
wobei die elektronische Auswerteeinheit (18) dazu eingerichtet ist, die Positionsverteilung der elektronischen Sendeeinheiten (12a-f) auf die Systemfahrzeugreifen (14a-f) aus den Signalinformationen unter Berücksichtigung von vorgegebenen Reifenplätzen in einem Reifenplan des Fahrzeugs zu bestimmen, und die elektronischen Sendeeinheiten (12a-f) in den Systemfahrzeugreifen (14a-f) den vorgegebenen Reifenplätzen zuzuordnen, wobei zumindest einem Teil der vorgegebenen Reifenplätze bezüglich der zeitabhängigen Reifeninformationen Zuordnungskriterien zugewiesen sind, die für die von einer elektronischen Sendeeinheit (12a-f) gesendeten zeitabhängigen Reifeninformationen erfüllt sein müssen, damit die elektronische Auswerteeinheit (16) die elektronische Sendeeinheit (12a-f) dem Reifenplatz zuweisen kann.

2. Fahrzeugsystem (10) nach Anspruch 1, wobei die elektronische Sendeeinheit (12a-f) und die elektronische Sensoreinheit (20a-f), jeweils durch die gleiche elektronische Baueinheit gebildet werden.

3. Fahrzeugsystem (10) nach einem der Ansprüche 1 oder 2, wobei die elektronischen Sensoreinheiten (20a-f) einen Beschleunigungssensor umfassen.

4. Fahrzeugsystem (10) nach einem der Ansprüche 1 bis 3, wobei die zeitabhängigen Reifeninformationen die Radlast und/oder mit der Radlast korrelierende Informationen umfassen.

5. Fahrzeugsystem (10) nach einem der Ansprüche 1 bis 4, wobei die zeitabhängigen Reifeninformationen die Radialbeschleunigung und/oder mit der Radialbeschleunigung korrelierende Informationen umfassen.

6. Fahrzeugsystem (10) nach einem der Ansprüche 1 bis 5, wobei die zeitabhängigen Reifeninformationen die Laufleistung und/oder mit der Laufleistung korrelierende Informationen umfassen.

7. Fahrzeugsystem (10) nach einem der Ansprüche 1 bis 6, wobei das Zuordnungskriterium durch Auswertung von während einer Anlernphase im Betrieb des Fahrzeugsystems (10) detektierten Reifeninformationen für eine bekannte Positionsverteilung der Systemfahrzeugreifen (14a-f) festgelegt wird.

8. Fahrzeugsystem (10) nach einem der Ansprüche 1 bis 7, wobei die elektronische Auswerteeinheit (18) dazu eingerichtet ist, ausgehend von einer zuvor bestimmten Positionsverteilung eine Veränderung der Position der Systemfahrzeugreifen (14a-f) im Fahrzeugsystem (10) durch eine Abweichung im Zuordnungskriterium eines oder mehrerer Reifenplätze festzustellen.

9. Fahrzeugsystem (10) nach einem der Ansprüche 2 bis 7, wobei die elektronischen Sensoreinheiten (20a-f) dazu eingerichtet sind, das Senden von Signalen in Abhängigkeit der mittels der Sensoreinheit (20a-f) bestimmten Radialbeschleunigung zu steuern.

10. Verfahren zur Bestimmung der Positionsverteilung von elektronischen Sendeeinheiten (12a-f) in den Fahrzeugreifen in dem Fahrzeugsystem (10) nach einem der Ansprüche 1 bis 9, umfassend für jeden Systemfahrzeugreifen (14a-f) die Verfahrensschritte:
x1) Bestimmen einer oder mehrerer dem Systemfahrzeugreifen (14a-f) zugeordneten zeitabhängigen Reifeninformationen mit der Sensoreinheit (20a-f), wobei die zeitabhängigen Reifeninformationen ausgewählt sind aus der Gruppe bestehend aus Radlast, Radialbeschleunigung, Laufleistung und mit diesen Größen korrelierenden Informationen,
x2) Senden eines Signals mit der elektronischen Sendeeinheit (12a-f) des Systemfahrzeugreifens (14a-f), wobei das Signal die zeitabhängigen Reifeninformationen umfasst,
x3) Empfangen des gesendeten Signals mit der Empfangseinheit (16) und Erhalten einer dem Systemfahrzeugreifen (14a-f) zugeordneten Signalinformation aus der ermittelten Signalstärke sowie empfangen der dem Systemfahrzeugreifen (14a-f) zugeordneten zeitabhängigen Reifeninformationen,
sowie die Verfahrensschritte:
y) Übermitteln der zeitabhängigen Reifeninformationen und der Signalinformationen durch die Empfangseinheit (16) an die elektronische Auswerteeinheit (18), und
z) Bestimmen der Positionsverteilung der elektronischen Sendeeinheiten (12a-f) der Systemfahrzeugreifen (14a-f) aus den Signalinformationen unter Berücksichtigung von vorgegebenen Reifenplätzen in einem Reifenplan des Fahrzeugs durch Zuordnen der elektronischen Sendeeinheiten (12a-f) der Systemfahrzeugreifen (14a-f) zu den vorgegebenen Reifenplätzen, wobei zumindest einem Teil der vorgegebenen Reifenplätze bezüglich der zeitabhängigen Reifeninformationen Zuordnungskriterien zugewiesen sind, wobei einem vorgegebenen Reifenplatz keine elektronischen Sendeeinheiten (12a-f) zugeordnet werden, deren gesendete zeitabhängige Reifeninformationen das Zuordnungskriterium nicht erfüllen.
